# EUROPEAN PATENT SPECIFICATION

(11) **EP 2 114 570 B1**
(45) Date of publication and mention of the grant of the patent: **05.06.2013**
(21) Application number: 08701821.4
(22) Date of filing: 16.01.2008
(51) Int. Cl.: B01L 3/00

(54) **MICROFLUIDIC DEVICE**
MIKROFLUIDISCHE VORRICHTUNG
DISPOSITIF MICROFLUIDIQUE

(30) Priority: 16.01.2007 GB 0700822
(43) Date of publication of application: 11.11.2009
(73) Proprietor: Lab 901 Limited, Midlothian EH20 9LZ (GB)
(72) Inventor: BARLOW, David, Edinburgh EH6 5FB (GB); THOMSON, David, Edinburgh EH10 4EB (GB); MACNAMARA, Ken, Edinburgh EH11 1SW (GB); POLWART, Stuart, Stirlingshire FK4 1UE (GB)
(74) Representative: Haeusler, Rüdiger Hans-Jörg
(86) International application number: PCT/GB2008/000143
(87) International publication number: WO 2008/087405

(56) References cited:
- WO-A-94/26414
- WO-A-99/03584
- WO-A-99/65664
- WO-A-02/081934
- WO-A-2004/080597
- WO-A2-2004/061418
- WO-A2-2006/081558
- WO-A2-2007/002480
- US-A- 5 500 071
- US-A1- 2003 118 804
- US-A1- 2004 101 442
- US-A1- 2005 089 449

## Description

The invention relates to a microfluidic device, and a method of forming a said device.

A microfluidic device is a device for manipulating and analysing a fluid sample on a micro-scale. A characterising feature of such devices is the presence of micro-scale volumes (often termed "microstructures") for holding and conducting fluids for analysis or testing or working on in some manner on the device. The advantages gained by working on such a micro-scale are well known. For the avoidance of doubt, the terms "volume" and "microstructure" as used herein are used to refer to any structure which may be used to for example, contain, manipulate, control or direct the flow of fluids within a microfludic device. Examples of such microstructures are channels, reaction chambers, hybridization chambers, pumps and valves.

A particular form of microfluidic device utilises a substantially planar device format. The development of integrated systems based on such a planar microfluidic device format has been in progress for several decades. They can be used for the automation of research into molecular biology and the development of diagnostic systems. An important milestone with respect to chemical and biochemistry analysis was the publication of the concept of micro-Total Analysis Systems by A. Manz et al (Sensors and Actuators B, 1990, 1, 244-248). The work introduced the concept of integrating all of the required steps of an analytical operation onto a single planar substrate. In this manner all the required processing steps from sample preparation to analysis could be conducted with minimal human intervention. For instance, an entire laboratory's equipment could be miniaturized onto a single device, thereby enabling significant cost and time savings.

Microfluidic devices can be fabricated from a variety of materials involving a range of processing steps. Materials such as glass and silicon are usually structured using semiconductor processing technology. Alternatively, polymer substrates are used to manufacture microfluidic devices. These can be structured with a wide array of technologies, for example, laser micromachining, hot embossing, thermoforming and injection moulding. Polymeric substrates are preferred in many systems over glass or silicon as they enable low cost mass fabrication. An example of a design for the fabrication of microfluidic devices from polymeric substrates is illustrated in US patent 5,932,799 in which multilayered laminated polyimide films are structured and bonded in an adhesive-less nature. This patent refers to US 5,525,405 which covers the development of polyimide composed of aromatic polyimides with an inorganic bonding enhancer such as Sn such that films can be bonded to form laminates. WO 94/26414 discloses a method for fabricating a microfluidic device using a heatsealing process whereby a laminate with a lower melting point layer is brought into contact with another laminate and the two laminates are heated to fuse the heatseal layers.

An important milestone in the history of microfluidics was the development of entire devices composed of an elastomeric material, poly-dimethyl-siloxane (PDMS) as disclosed in US 6,843,262. These developments were mostly based on pouring an elastomeric resin over microfabricated positive features to create channels in the PDMS.

The various functional requirements for a microfluidic device can be summarized in terms of structural, optical and chemical performance. For example, for use in detection systems using fluorescence-based detection schemes the materials from which the devices are formed should have optical clarity and minimal autofluorescence. In addition, in order to be commercially viable such devices should be susceptible to accurate, automated mass production techniques. Techniques such as thermoforming are useful in this regard, and the wide diversity of available thermoformable polymeric materials makes achieving specific functional requirements more easy. However, it is a general requirement for all such devices that they must have the ability to be accurately structured with microscale fluid containment features. The sizes and shapes of such microstructures are key to the proper performance of these devices and any deviation, even by relatively small tolerances can impair proper functioning or impede it altogether. The use of thermoforming or thermobonding steps in manufacturing subsequent to microstructure formation, which is often a requirement, all too easily causes loss of definition in thermoformed microstructures.

Furthermore, the films, once structured must be stable over time and permit reagents to be stored within the structures without leaching from the polymer, adsorption of reagents, and transmission of gases in order to provide a shelf-life acceptable by the commercial market. It is also desirable that the films are formed from a biocompatible material, so that the reaction to be conducted within the device is not affected, for instance ensuring minimal protein and nucleic acid adsorption to the inside of channels or reaction chambers.

It is an object of the invention to seek to mitigate problems such as these.
Claim 1 defines a microfluidic device according to the invention. The invention provides a microfluidic device which contains accurately sized and shaped microfluidic structures, which is straightforward and economical to assemble without deformation of the fluid containment volume.

It is preferred that the first film and the second film each comprises a coextruded film. Formation of the microfluidic device from coextruded films of the relatively higher softening temperature and relatively lower melt temperature thermoplastic polymeric materials provides a microfluidic device with a relatively high structural integrity which is straightforward to mass produce.

The relatively lower melt temperature materials of the first film and the second film may each comprise the same material. This ensures that the fluid containment volume has a uniform internal surface. Alternatively, the relatively lower melt temperature materials of the first film and the second film may each comprise different materials, to provide a fluid containment volume with varying internal surface characteristics.

One or each film may further comprise a structural layer disposed on the relatively higher softening temperature material. Preferably, the structural layer comprises a material having a higher melting temperature than the relatively higher softening temperature material. The structural layer provides support to the other materials in the device, and where the films are coextruded, helps keep them flat during coextrusion. It can also assist during thermoforming of the fluid containment volume structure by preventing the relatively higher softening temperature material from sticking to the forming tool, and will also resist melting into imperfections in the tool which may affect optical clarity.

One or each film may further comprise a gas-barrier layer. One or more layers may be combined to provide a tailored gas permeability. Examples of gas barrier materials are EVOH and Polyamide.

In one preferred embodiment, the device will further comprise a reaction-mixture holding vessel.

It is preferred that one or both films are optically clear, and that the relatively lower melt temperature material comprises a biocompatible, physiologically inert material.

One or each film may also comprise a liquid barrier layer for enhancing the self-life and performance of pre-packaged reagents. One or more layers may be combined to provide a tailored moisture permeability. COC is an example of a liquid barrier.

The relatively higher softening temperature material of the first and/or second film preferably comprises a cyclic olefin copolymer, a polycarbonate, a polyester, a polymethyl methacrylate, a polyamide or blends or copolymers thereof. The relatively lower melt temperature material preferably comprises polyethylene.

Claim 20 defines a method of manufacturing a microfluidic device according to the invention. The method ensures that the integrity of the thermo-formed fluid containment structure is not affected by the process for attachment of the films.

It is preferred that the method includes the step of forming the said first and second films by coextrusion of the relatively higher softening temperature and relatively lower melt temperature materials prior to thermoforming the fluid containment structure and melting together of the films.

The method may further include the step of coextruding one or more further material with each film, such as a support layer, a gas barrier layer or a liquid barrier layer.

The first and second thermoplastic films may be formed by coextrusion with the heat seal layer on one side and a support layer on the other and the method further include the step of forming the thermoformed reaction volume by (vacuum) forming in a tool with the support layer in contact with the tool surface. The reaction volume forming step is preferably a thermo-forming step, carried out at a lower temperature than the melting temperature of the support layer.

The first and second films may be formed by coextrusion of a cyclic olefin copolymer with polyethylene, polymethyl methacrylate (PMMA), polyamides (PA) and blends of copolymers thereof.

The invention will now be illustrated by way of example with reference to the following drawings in which:
Figure 1 shows a first embodiment of a film according to the invention;
Figure 2 shows a second embodiment of a film according to the invention;
Figure 3 shows a third embodiment of a film according to the invention;
Figure 4 is a photograph of the film of Figure 3;
Figure 5 shows a film of Figure 3 with a heater;
Figure 6 shows a fourth embodiment of a film according to the invention;
Figure 7 shows a fifth embodiment of a film according to the invention;
Figure 8 shows a sixth embodiment of a film according to the invention in a first position;
Figure 9 shows the film of Figure 8 in a second position;
Figure 10a is a plan view photograph of a seventh embodiment of a film according to the invention; and
Figure 10b is a cross section along a-a of the film of Figure 10a.

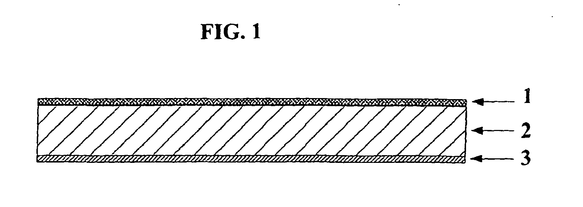

The film shown in Figure 1 is a co-extruded unit comprising three layers 1, 2, 3. The first layer 1 is made from a polyethylene, Exact 0210 from DEX Plastics (Heerlenm, the Netherlands). The second layer 2 is made from a blend of COC, Topaz from Ticona. The blend is 70% Topaz 6013 and 30% Topaz 8007. The third layer 3 is made from a polypropylene, HP420M from Basell (Hoofdorp, The Netherlands). Extrusion may be carried out by any known process therefor.

The second layer 2 is sandwiched between the two outer layers 1, 3 and may be formed by extrusion as a thin layer. The outer layers 1, 3 allow the film to be more robust and avoid breakage of thin layer 2. The film was made by co-extruding the three layers. The extruder was programmed to obtain a total film thickness of 160µm with the center core of COC having a thickness of 130µm.

After co-extrusion, the film may be thermoformed to provide one or more microstructures (not shown). The microstructures may be conventional microstructures such as channels, reaction chambers, hybridization chambers, pumps and valves, or may be specially developed for use with the film of the present invention. The microstructures which are selected for any particular film will depend on the application of that film.

One application of the film of Figure 1 is for manufacturing a microfluidic device for use in DNA analysis. For such an application, the film may include a microstructure which consists of a channel with a buffer chamber at either end. Within the buffer chambers are planar electrodes used to separate the DNA with an electrophoresis step. The electrodes are carbon electrodes which are screen printed onto the polyethylene layer (the melt seal layer). In the context the invention, platinum and silver electrode may also be used, for example Ag/AgCl may be used as a reference electrode and Pt as a counter electrode.

Electrodes must be encapsulated while being exposed at one point externally and at another point internally. By applying an electrode to a melt seal layer it becomes possible to laminate the melt seal layer to another layer or unit including a channel so that the electrode is exposed internally on one side. A hole may then be punched through the melt seal layer on the other side of the electrode so that the electrode is also exposed externally. Screen printed carbon electrodes can easily break upon application of heat and pressure during lamination of the films to form the microfluidic device, but this may be avoided by using a co-extruded film having an appropriate thickness of polyethylene and by using an appropriate pressure, temperature, and time for lamination. These variables combined enable the film to be laminated while ensuring that the polyethylene does not flow sufficiently to break the screen printed electrodes.

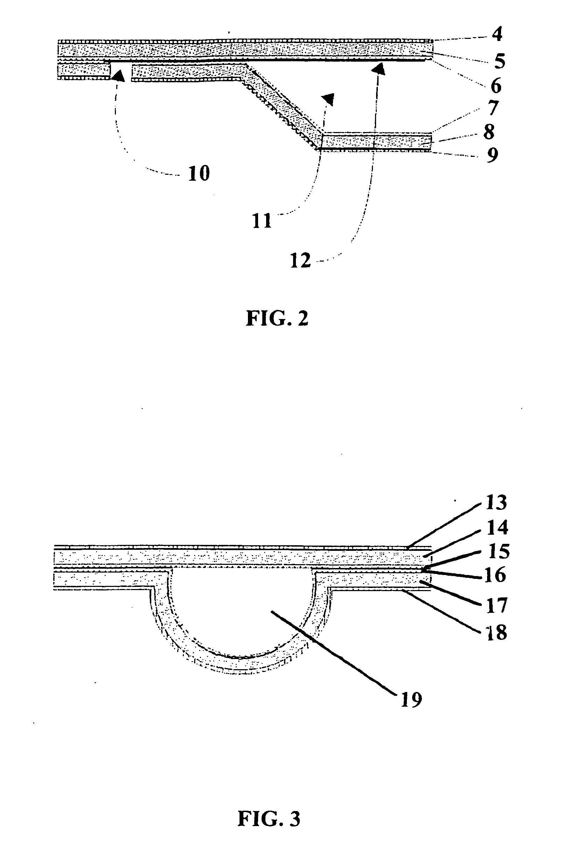

Figure 2 is used to describe the concept of inserting electrodes into the multilayer device. The device comprises polypropylene layer 4, COC layer 5, polyethylene layer 6, polyethylene layer 7, COC layer 8 and polypropylene layer 9. Area 10 is the hole to allow access to the electrode which is thereby accessible externally. Area 11 is a buffer chamber or some internal lumen where voltage is to be applied and finally area 12 is the electrode itself. The electrode may be applied by printing, and may consist of a printable conductive material. Such materials are carbon, graphite, and metallic based inks.

Another application of the film of Figure 1 is for manufacturing a microfluidic device for use in a nucleic acid amplification reaction such as the Polymerase Chain Reaction (PCR). For such an application the film may include microstructures which consist of 1.5µl reaction chambers. In addition, the specific design of the co-extruded polymer was stable for the high temperature requirements of PCR, whilst maintaining good lamination. Furthermore, the thin film enabled rapid heat transfer which is very important for conducting the reaction as fast as possible. The film properties enables the laminate to be slightly flexible which permitted a very tight fit between the reaction chamber and the heater, thereby facilitating rapid heat transfer. Finally, the selection of COC as the bulk layer and its excellent optical properties enables quantification with real-time PCR techniques commonly employed on much larger volumes. It should also be noted that reagents used in PCR can absorb certain polymers and it is therefore important to control the surface properties to improve the reaction yield or even to attain a successful reaction, as explained for example in Liu et al., Lab on Chip, 2006, 769-775.

The PCR reaction can be conducted by thermo-cycling with any number of methods. These include but are not limited to thermoelectric heaters, water baths of varying temperatures, thin film heating elements, Infra-red based heating, continuous flow designs and hot air designs. The method of heating can be changed to suit the exact application, but often the basis of the design is to permit rapid heat transfer.

The PCR reaction chamber was thermoformed using a hemispherical female tool with two channels. One channel was used for loading the reaction chamber with pre-mixed PCR reagents. The other channel was used as an air vent. The tape was then thermo-cycled and following this the PCR reagents were withdrawn and run on a electrophoresis gel for analysis of the PCR amplicons.

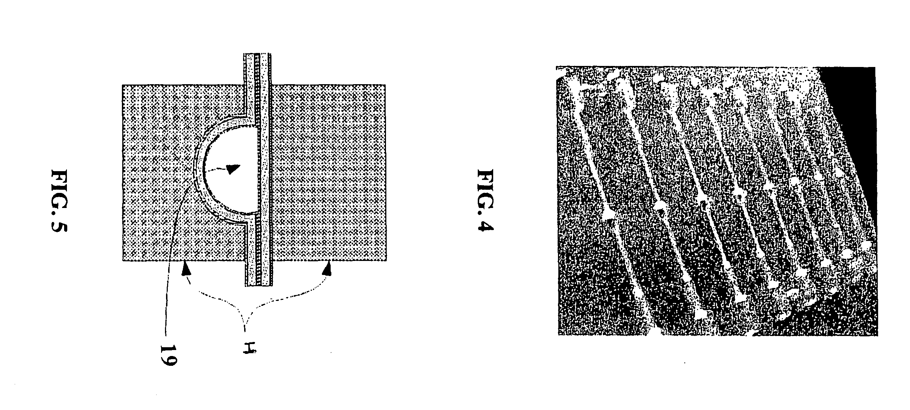

Figure 3 illustrates a third embodiment, in which the device comprises polypropylene layer core polymer layer 14 (in this embodiment COC), polyethylene melt seal layers 15 and 16, bulk layer 17 with the formed channels and reaction chambers, polypropylene layer 18 and finally a hemispherical reaction chamber 19. Figure 4 is a photograph of the hemispherical reaction chambers of Figure 3 comprising two channels and loading chambers formed in the co-extruded films. Figure 5 shows the PCR reaction chamber 19 with the heater H used to conduct the thermo-cycling.

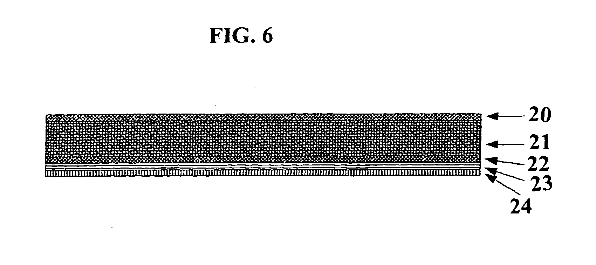

The film shown in Figure 6 is a co-extruded unit comprising five layers 20, 21, 22, 23, 24. The first layer 20 is 15µm thick, and is made from a polyethylene, Exact 0210, from DEX Plastics (Heerlenm, The Netherlands). The second layer 21 is 100µm thick, and is made from the same blend of the COC, Topaz COC, as in the embodiment of Figure 1. The third layer 22 is made from a blend of 80% Exact 0210 and 20% Bynel 47E710, a maleic anhydride grafted polyethylene from Dupont. The fourth layer 23 is 15µm thick and is made from an ethylene vinyl alcohol (EVOH) Kurraray LCF101 from Mutsui. The fifth layer 24 is 15µm thick and is made from a maleic anhydride grafted polypropylene 18707 from Arkema.

The film was made by co-extruding the five layers. Layer 23 acts as a gas barrier. Layer 22 acts as a tie layer to tie layer 23 to layer 21.

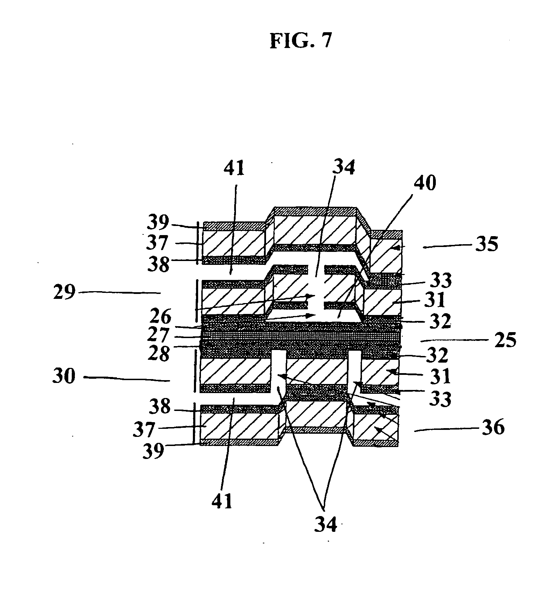

The film shown in Figure 7 comprises a number of individual co-extruded units, which have been laminated together to form a larger more complex fluid control structure. The core elastomer unit 25 comprises three layers 26, 27, 28. The two outer layers 26, 28 are both made of a polyethylene, Exact 0210, from DEX Plastomers (Heerlen, The Netherlands). The central layer 27 is made of an elastomer, Adflex X100F, from Basell (Hoofddorp, The Netherlands). The three extrusion lines are run at appropriate speeds to produce a central layer 27 approximately 30 µm thick with 3.75 µm thick outer layers 26, 28.

Two units 29, 30, each consisting of a layer 31 of COC co-extruded between two layers 32, 33 of the polyethylene, Exact 0210, are laminated to either side of the core elastomer unit 25. Each unit 29, 30 contains one or more microstructures in the form of vials 34 which extend through the entire unit 29, 30.

Two further units 35, 36, each consisting of a layer 37 of COC co-extruded between a layer 38 of the polyethylene, Exact 0210 and a layer 39 of polypropylene, are laminated to either side of the two units 29, 30, and form the outermost units. Layers 31 and 37 are generally about 130µm thick, layers 32, 33, 38, 39, each 15µm thick.

Three of the units 29, 35, 36 are shaped by thermoforming before lamination to provide a number of microstructures in the form of void areas 40 and channels 41 between the units.

Lamination is conducted in such a manner that the units are bonded across the entire surface except in the area between and directly proximal to the vials 34, void areas 40 and channels 41. The outer units 35, 20 are elevated above their melting temperature so that the polyethylene layer 38 of each outer unit bonds with the adjacent polyethylene layer 32 of the inner units 29, 30. The core elastomer unit 25 remains substantially firm and thus maintains its integrity so that the polyethylene layers 26, 28 on the elastomer unit 25 do not flow into the microstructures 18, 23, 24 adjacent to the elastomer unit 25.

By applying pressure or a vacuum on either side of the elastomer unit 25, fluid flow through the film may be controlled, for example, the movement upward of elastomer unit 25 (by negative pressure) can allow a fluid in lower channel 41 to pass through vials 34 thereby acting as a valve.

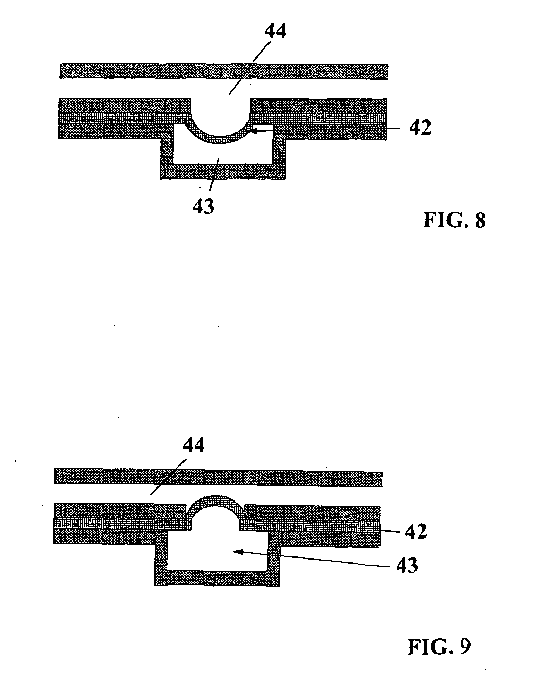

This is illustrated by the film shown in Figures 8 and 9 which comprised layer 42, made of an elastomer, Adflex X100F, from Basell (Hoofddorp, The Netherlands). In addition, the density of moleculres at the surface of the elastomer layer may be altered, which has applications in controlling reactions and enhancing the signal to noise ratio.

On one side of the elastomer layer 42 is a void area 43. On the other side of the elastomer layer 42 is a T-shaped channel 44, which contains biomolecules to be analysed with a surface bound reaction. When a vacuum is applied to the void area 43, the elastomer layer 42 deforms into the void area 43 as shown in Figure 8. This changes the density of biomolecules on the surface. This can be used to control the hybridization of nucleic acids, or to control antigen-antibody interactions or biotin-streptavidin complex formation. It can also enhance signal to noise ratio as it reduces the area under investigation and so concentrates the signal. When pressure is applied to the void area 43, the elastomer layer 42 deforms into the T-shaped channel 44. This results in a larger surface area which will be better at binding the biomolecules in solution.

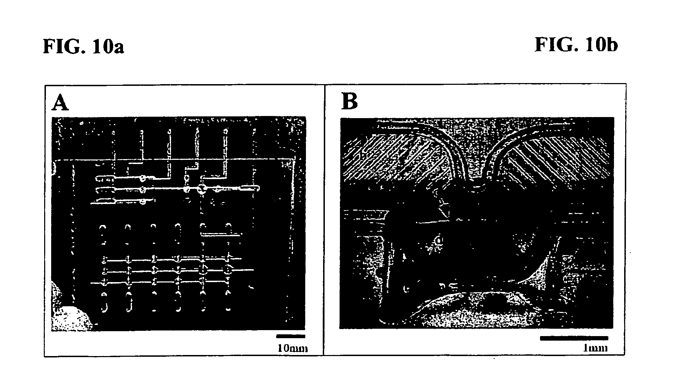

Finally, Figure 10a is a plan view of a device according to the present invention and a-a represents the position of the cross section as shown in Figure 10b. The device comprises microfluidic channel b (hatched area), flexible polymer film c, metering chamber d and pneumatic control chamber e. It is pointed out that the circles in Figure 10b are merely voids generated in microscopy preparation.

## Claims

1. A microfluidic device, comprising a laminate of first and second films, one or each film including an integrally thermoformed structure such that the films together define an enclosed reaction volume (19) for fluid containment therebetween, wherein each film itself comprises a laminate of a relatively higher softening temperature thermoplastic polymeric material (14,17) and with respect thereto, a relatively lower melt temperature thermoplastic polymeric material (15,16), the respective relatively low melt temperature thermoplastic polymeric materials (15,16) of each film being melted together to attach the said first and second films together,
wherein the first film or the second film includes externally energisable electrodes consisting of a printable conductive material disposed to be in operative connection with a fluid in the reaction volume (19),
wherein the reaction volume (19) comprises an electrophoresis vessel.

2. A device according to claim 1, wherein the first film and second film are each coextruded films.

3. A device according to claim 1 or claim 2, wherein the printable conductive material is carbon, graphite and/or a metallic based ink.

4. A device according to any preceding claim, wherein the melting temperatures of all layers can withstand the upper temperature used in a PCR thermo-cycling reaction process and that the relatively higher melt temperature layer will remain substantially rigid under these conditions, and optionally each first relatively higher melt temperature material is substantially rigid at temperatures from 10 to 50 °C.

5. A device according to any preceding claim, wherein one or both films comprise an optically clear material.

6. A device according to any preceding claim, wherein the heat seal layer material comprises a biocompatible, physiologically inert material.

7. A device according to any preceding claim, wherein the heat seal layer material coats at least a part of an internal surface of the integrally-formed reaction volume or substantially the entire internal surface of the integrally-formed reaction volume.

8. A device according to any preceding claim, wherein the relatively low melting point materials of the first film and the second film comprise the same material or the relatively low melting point materials of the first film and the second film comprise different materials.

9. A device according to any preceding claim, comprising a reaction-mixture holding vessel.

10. A device according to any preceding claim, further comprising a structural layer disposed on the relatively high melting point material of the first and/or second film.

11. A device according to claim 10, wherein the structural layer comprises a material having a higher melting temperature than the relatively high melting point material.

12. A device according to any preceding claim, further comprising a gas-barrier layer.

13. A device according to any preceding claim, further comprising a liquid-barrier layer.

14. A device according to any preceding claim, wherein the relatively high melting point material of the first and/or second film comprises a cyclic olefin copolymer, a polycarbonate, a polyester, a polymethyl methacrylate, a polyamide or blends or copolymers thereof.

15. A device according to any preceding claim, wherein the melt seal layer comprises polyethylene and the heat seal layer may comprise corona-treated polyethylene.

16. A device according to any preceding claim, wherein one or both films comprise an elastomer layer.

17. A device according to claim 16, wherein the elastomer layer is sandwiched between two melt seal layers to form an elastomer unit.

18. A device according to claim 17, wherein the elastomer unit is sandwiched between two co-extruded units, the co-extruded units comprising a bulk layer sandwiched between two melt seal layers.

19. A device according to any of claims 16 to 18, wherein one or both films comprise a void area or channel on cither side of the elastomer layer or unit.

20. A method of manufacturing a microfluidic device according to claim 1, comprising the steps of providing first and second films, each film itself comprising a laminate of a relatively high softening temperature thermoplastic polymeric material and with respect thereto, a relatively lower melt temperature thermoplastic polymeric material and combining said first and second films together by melting the relatively lower melt temperature materials together, wherein the melting step is performed at a lower temperature than the softening temperature of the relatively high softening temperature thermoplastic polymeric materials, printing externally energisable electrodes consisting of a printable conductive material disposed to be in operative connection with a fluid in the reaction volume, wherein the reaction volume comprises an electrophoresis vessel.

21. A method according to claim 20, wherein the first and second thermoplastic films are formed by coextrusion of a relatively higher softening point thermoplastic polymeric material and relatively lower melting point thermoplastic polymeric material, prior to formation of the reaction volume.

22. A method according to claim 20 or claim 21, comprising using carbon, graphite and/or a metallic based ink as printable conductive material.

23. A method according to either claim 21 or claim 22, wherein the first and second thermoplastic films arc formed by coextrusion with the heat seal layer on one side and a support layer on the other, the method further including the step of forming the thermoformed reaction volume by forming in a tool with the support layer in contact with the tool surface.

24. A method according to claim 23, wherein the reaction volume forming step is a thermo-forming step, carried out at a lower temperature than the melting temperature of the support layer.

25. A method according to any of claims 21 to 24, wherein the first and second films are formed by coextrusion of a cyclic olefin copolymer with polyethylene.

## Patentansprüche

1. Eine mikrofluidische Vorrichtung, welche einen Schichtstoff aus einer ersten und einer zweiten Folie aufweist, wobei eine oder jede Folie eine integral thermogeformte Struktur beinhaltet, so dass die Folien zusammen dazwischen ein eingeschlossenes Reaktionsvolumen (19) für einen Fluideinschluss definieren, wobei jede Folie selbst einen Schichtstoff eines thermoplastischen polymerischen Materials (14, 17) mit relativ höherer Weichmach-Temperatur und, in Bezug dazu, eines thermoplastischen polymerischen Materials (15, 16) mit relativ geringerer Schmelztemperatur aufweist, wobei die jeweiligen thermoplastischen polymerischen Materialen (15, 16) mit relativ geringer Schmelztemperatur von jeder Folie zusammengeschmolzen sind, um die erste und zweite Folie aneinander zu befestigen,
wobei die erste Folie oder die zweite Folie extern erregbare Elektroden beinhaltet, welche aus einem druckbaren leitfähigen Material bestehen, welches angeordnet ist, um in funktionsfähiger Verbindung mit einem Fluid in dem Reaktionsvolumen (19) zu sein,
wobei das Reaktionsvolumen (19) ein Elektrophoresegefäß aufweist.

2. Eine Vorrichtung gemäß Anspruch 1, wobei die erste Folie und die zweite Folie jeweils co-extrudierte Folien sind.

3. Eine Vorrichtung gemäß Anspruch 1 oder Anspruch 2, wobei das druckbare leitfähige Material Karbon, Graphit und/oder eine Metall-basierte Tinte ist.

4. Eine Vorrichtung gemäß irgendeinem vorherigen Anspruch, wobei die Schmelztemperaturen von allen Schichten der oberen Temperatur widerstehen können, welche in einem PCR-Thermo-Cycling-Reaktionsprozess verwendet wird, und dass die Schicht mit relativ höherer Schmelztemperatur unter diesen Bedingungen im Wesentlichen steif verbleiben wird, und optional jedes erste Material mit relativ höherer Schmelztemperatur bei Temperaturen zwischen 10 und 50°C im Wesentlichen steif ist.

5. Eine Vorrichtung gemäß irgendeinem vorherigen Anspruch, wobei eine oder beide Folien ein optisch durchsichtiges Material aufweisen.

6. Eine Vorrichtung gemäß irgendeinem vorherigen Anspruch, wobei das Hitzeversiegelungsschichtmaterial ein biokompatibles, physiologisch inertes Material aufweist.

7. Eine Vorrichtung gemäß irgendeinem vorherigen Anspruch, wobei das Hitzeversiegelungsschichtmaterial zumindest einen Teil einer internen Oberfläche des integral geformten Reaktionsvolumens oder im Wesentlichen die gesamte interne Oberfläche des integral geformten Reaktionsvolumens bedeckt.

8. Eine Vorrichtung gemäß irgendeinem vorherigen Anspruch, wobei die Materialien mit relativ geringem Schmelzpunkt der ersten Folie und der zweiten Folie das gleiche Material aufweisen oder die Materialien mit relativ geringem Schmelzpunkt der ersten Folie und der zweiten Folie unterschiedliche Materialien aufweisen.

9. Eine Vorrichtung gemäß irgendeinem vorherigen Anspruch, welche ein Reaktion-Mischung-Haltegefäß aufweist.

10. Eine Vorrichtung gemäß irgendeinem vorherigen Anspruch, welches ferner eine strukturelle Schicht aufweist, welche auf dem Material mit relativ hohem Schmelzpunkt der ersten und/oder zweiten Folie angeordnet ist.

11. Eine Vorrichtung gemäß Anspruch 10, wobei die strukturelle Schicht ein Material aufweist, welches eine höhere Schmelztemperatur als das Material mit relativ hohem Schmelzpunkt aufweist.

12. Eine Vorrichtung gemäß irgendeinem vorherigen Anspruch, welche ferner eine Gasbarriereschicht aufweist.

13. Eine Vorrichtung gemäß irgendeinem vorherigen Anspruch, welche ferner eine Flüssigkeitsbarriereschicht aufweist.

14. Eine Vorrichtung gemäß irgendeinem vorherigen Anspruch, wobei das Material mit relativ hohem Schmelzpunkt der ersten und/oder zweiten Folie ein zyklisches Olefin-Copolymer, ein Polycarbonat, ein Polyester, ein Polymethyl Methacrylat, ein Polyamid oder Mischungen oder Copolymere davon aufweist.

15. Eine Vorrichtung gemäß irgendeinem vorherigen Anspruch, wobei die Schmelzversiegelungsschicht Polyethylen aufweist und die Hitzeversiegelungsschicht Corona-behandeltes Polyethylen aufweisen kann.

16. Eine Vorrichtung gemäß irgendeinem vorherigen Anspruch, wobei eine oder beide Folien eine Elastomerschicht aufweisen.

17. Eine Vorrichtung gemäß Anspruch 16, wobei die Elastomerschicht zwischen zwei Schmelzversiegelungsschichten eingelegt ist, um eine Elastomereinheit zu bilden.

18. Eine Vorrichtung gemäß Anspruch 17, wobei die Elastomereinheit zwischen zwei co-extrudierten Einheiten eingelegt ist, wobei die co-extrudierten Einheiten eine Bulk-Schicht aufweisen, welche zwischen zwei Schmelzversiegelungsschichten eingelegt ist.

19. Eine Vorrichtung gemäß irgendeinem der Ansprüche 16 bis 18, wobei eine oder beide Folien ein leeres Gebiet oder einen Kanal auf beiden Seiten der Elastomerschicht oder -einheit aufweisen.

20. Ein Verfahren zum Herstellen einer mikrofluidischen Vorrichtung gemäß Anspruch 1, welches die Schritte aufweist von: Bereitstellen von ersten und zweiten Folien, wobei jede Folie selbst einen Schichtstoff eines thermoplastischen polymerischen Materials mit relativ hoher Weichmach-Temperatur und, in Bezug dazu, eines thermoplastischen polymerischen Materials mit relativ geringerer Schmelztemperatur aufweist, und zusammen Verbinden der ersten und zweiten Folie mittels Zusammenschmelzens der Materialien mit relativ geringerer Schmelztemperatur, wobei der Schmelzen-Schritt bei einer geringeren Temperatur als der Weichmach-Temperatur der thermoplastischen polymerischen Materialen mit relativ hoher Weichmach-Temperatur durchgeführt wird, Drucken extern erregbarer Elektroden, welche aus einem druckbaren leitfähigen Material bestehen, welches angeordnet ist, um in funktionsfähiger Verbindung mit einem Fluid in dem Reaktionsvolumen zu sein, wobei das Reaktionsvolumen ein Elektrophoresegefäß aufweist.

21. Ein Verfahren gemäß Anspruch 20, wobei die erste und zweite thermoplastische Folie mittels einer Co-Extrusion eines thermoplastischen polymerischen Materials mit relativ höherem Weichmachpunkt und eines thermoplastischen polymerischen Materials mit relativ geringerem Schmelzpunkt, vor dem Bilden des Reaktionsvolumens gebildet wird.

22. Ein Verfahren gemäß Anspruch 20 oder Anspruch 21, welches ein Verwenden von Karbon, Graphit und/oder einer Metall-basierten Tinte als druckbares leitfähiges Material aufweist.

23. Ein Verfahren gemäß entweder Anspruch 21 oder Anspruch 22, wobei die erste und zweite thermoplastische Folien mittels einer Co-Extrusion mit der Hitzeversiegelungsschicht auf einer Seite und einer Unterstützungsschicht auf der anderen gebildet wird, wobei das Verfahren ferner den Schritt eines Bildens des thermogeformten Reaktionsvolumens mittels Bildens mit der Unterstützungsschicht in einem Werkzeug in Kontakt mit der Werkzeugoberfläche beinhaltet.

24. Ein Verfahren gemäß Anspruch 23, wobei der Reaktionsvolumen-Bilden-Schritt ein Thermoformen-Schritt ist, welcher bei einer geringeren Temperatur als die Schmelztemperatur der Unterstützungsschicht ausgeführt wird.

25. Ein Verfahren gemäß irgendeinem der Ansprüche 21 bis 24, wobei die erste und zweite Folie mittels einer Co-Extrusion eines zyklischen Olefin-Copolymers mit Polyethylen gebildet wird.

## Revendications

1. Dispositif microfluidique, comprenant un stratifié composé d'un premier et d'un second film, un film ou chaque film comprenant une structure intégralement thermoformée de façon que les films définissent ensemble un volume réactionnel clos (19) destiné à contenir un fluide entre eux, dans lequel chaque film comprend lui-même un stratifié composé d'un matériau polymère thermoplastique à température de ramollissement relativement plus élevée (14, 17) et par rapport à ce dernier, un matériau polymère thermoplastique à température de fusion relativement plus basse (15, 16), les matériaux polymères thermoplastiques à température de fusion relativement basse respectifs (15 ,16) de chaque film étant fondus ensemble pour fixer ledit premier film et ledit second film l'un à l'autre,
dans lequel le premier film ou le second film contient des électrodes alimentables de l'extérieur constituées d'un matériau conducteur imprimable disposé de façon à être en connexion fonctionnelle avec un fluide se trouvant dans le volume réactionnel (19),
dans lequel le volume réactionnel (19) comprend un récipient d'électrophorèse.

2. Dispositif selon la revendication 1, dans lequel le premier film et le second film sont chacun des films coextrudés.

3. Dispositif selon la revendication 1 ou la revendication 2, dans lequel le matériau conducteur imprimable est une encre à base de carbone, de graphite et/ou d'un métal.

4. Dispositif selon l'une quelconque des revendications précédentes, dans lequel les températures de fusion de toutes les couches peuvent supporter la température supérieure utilisée dans un procédé de réaction par thermocyclage PCR et la couche à température de fusion relativement plus élevée restera essentiellement rigide dans ces conditions, et éventuellement les matériaux à température de fusion relativement plus élevée sont tous essentiellement rigides à des températures allant de 10 °C à 50 °C.

5. Dispositif selon l'une quelconque des revendications précédentes, dans lequel un film ou les deux films comprennent un matériau optiquement transparent.

6. Dispositif selon l'une quelconque des revendications précédentes, dans lequel le matériau de la couche de joint thermique comprend un matériau biocompatible physiologiquement inerte.

7. Dispositif selon l'une quelconque des revendications précédentes, dans lequel le matériau de la couche de joint thermique recouvre au moins une partie d'une surface interne du volume réactionnel intégralement formé ou essentiellement toute la surface interne du volume réactionnel intégralement formé.

8. Dispositif selon l'une quelconque des revendications précédentes, dans lequel les matériaux à point de fusion relativement bas du premier film et du second film comprennent des matériaux identiques ou les matériaux à point de fusion relativement bas du premier film et du second film comprennent des matériaux différents.

9. Dispositif selon l'une quelconque des revendications précédentes, comprenant un récipient de retenue de mélange réactionnel.

10. Dispositif selon l'une quelconque des revendications précédentes, comprenant en outre une couche structurelle disposée sur le matériau à point de fusion relativement élevée du premier film et/ou du second film.

11. Dispositif selon la revendication 10, dans lequel la couche structurelle comprend un matériau possédant une température de fusion plus élevée que le matériau à point de fusion relativement élevée.

12. Dispositif selon l'une quelconque des revendications précédentes, comprenant en outre une couche barrière contre les gaz.

13. Dispositif selon l'une quelconque des revendications précédentes, comprenant en outre une couche barrière contre les liquides.

14. Dispositif selon l'une quelconque des revendications précédentes, dans lequel le matériau à point de fusion relativement élevé du premier film et/ou du second film comprend un copolymère d'oléfine cyclique, un polycarbonate, un polyester, un poly(méthacrylate de méthyle), un polyamide ou des mélanges ou des copolymères de ceux-ci.

15. Dispositif selon l'une quelconque des revendications précédentes, dans lequel la couche de joint thermofusible comprend un polyéthylène et la couche de joint thermique peut comprendre un polyéthylène ayant subi un traitement corona.

16. Dispositif selon l'une quelconque des revendications précédentes, dans lequel un film ou les deux films comprennent une couche d'élastomère.

17. Dispositif selon la revendication 16, dans lequel la couche d'élastomère est intercalée entre deux couches de joint thermofusible pour former une unité d'élastomère.

18. Dispositif selon la revendication 17, dans lequel l'unité d'élastomère est intercalée entre deux unités coextrudées, les unités coextrudées comprenant une couche expansée intercalée entre deux couches de joint thermofusible.

19. Dispositif selon l'une quelconque des revendications 16 à 18, dans lequel un film ou les deux films comprennent une zone de vide ou un canal de chaque côté de la couche d'élastomère ou de l'unité.

20. Procédé de fabrication d'un dispositif microfluidique selon la revendication 1, comprenant les étapes suivantes : l'obtention d'un premier film et d'un second film, chaque film comprenant lui-même un stratifié composé d'un matériau polymère thermoplastique à température de ramollissement relativement élevée et par rapport à ce dernier, un matériau polymère thermoplastique à température de fusion relativement plus basse, et la combinaison dudit premier film et dudit second film par la fusion des matériaux à température de fusion relativement plus basse les uns avec les autres, dans lequel l'étape de fusion est réalisée à une température plus basse que la température de ramollissement des matériaux polymères thermoplastiques à température de ramollissement relativement élevée, l'impression d'électrodes alimentables de l'extérieur constituées d'un matériau conducteur imprimable disposé de façon à être en connexion fonctionnelle avec un fluide se trouvant dans le volume réactionnel, dans lequel le volume réactionnel comprend un récipient d'électrophorèse.

21. Procédé selon la revendication 20, dans lequel les premier et second films thermoplastiques sont formés par la coextrusion d'un matériau polymère thermoplastique à point de ramollissement relativement plus élevé et d'un matériau polymère thermoplastique à point de fusion relativement plus bas, avant la formation du volume réactionnel.

22. Procédé selon la revendication 20 ou la revendication 21, comprenant l'utilisation d'une encre à base de carbone, de graphite et/ou d'un métal comme matériau conducteur imprimable.

23. Procédé selon la revendication 21 ou la revendication 22, dans lequel les premier et second films thermoplastiques sont formés par coextrusion avec la couche de joint thermique d'un côté et une couche de support sur l'autre côté, le procédé comprenant en outre l'étape de formation du volume réactionnelle thermoformé par formation dans un outil avec la couche de support en contact avec la surface de l'outil.

24. Procédé selon la revendication 23, dans lequel l'étape de formation du volume réactionnel est une étape de thermoformage réalisée à une température plus basse que la température de fusion de la couche de support.

25. Procédé selon l'une quelconque des revendications 21 à 24, dans lequel les premier et second films sont formés par la coextrusion d'un copolymère d'oléfine cyclique avec un polyéthylène.
